# EUROPÄISCHE PATENTSCHRIFT

(11) **EP 3 057 187 B1**
(45) Veröffentlichungstag und Bekanntmachung des Hinweises auf die Patenterteilung: **21.06.2023**
(21) Anmeldenummer: 15197510.9
(22) Anmeldetag: 02.12.2015
(51) Int. Cl.: H02G 3/12, H02G 3/14, H02G 3/16

(54) **GERÄT DER GEBÄUDEINSTALLATIONSTECHNIK MIT EINEM ANZEIGE- UND/ODER BEDIENELEMENT**
BUILDING INSTALLATION TECHNOLOGY APPARATUS WITH A DISPLAY AND/OR CONTROL ELEMENT
APPAREIL DE LA TECHNIQUE D'INSTALLATION DE BATIMENT COMPRENANT UN ELEMENT D'AFFICHAGE ET/OU DE COMMANDE

(30) Priorität: 16.02.2015 DE 102015001827
(43) Veröffentlichungstag der Anmeldung: 17.08.2016
(73) Patentinhaber: ABB Schweiz AG, 5400 Baden (CH)
(72) Erfinder: Diehl, Sven, 57078 Siegen (DE); Ewers, Manfred, 58239 Schwerte (DE); Kruppa, Christian, 44651 Herne (DE); de Jager, Dirk Petrus Gijsbertus, 6824EH Arnhem (NL)
(74) Vertreter: Wesch, Arno

(56) Entgegenhaltungen:
- EP-A1- 2 413 445
- DE-A1- 1 690 418
- DE-U1-202012 101 320
- US-A1- 2005 181 675
- US-A1- 2006 089 011
- US-A1- 2008 110 672

## Beschreibung

Die Erfindung bezieht sich auf ein Gerät der Gebäudeinstallationstechnik oder Gebäudesystemtechnik gemäß den Merkmalen des Oberbegriffs des Anspruchs 1.

Ein solches Gerät ist aus der DE 20 2012 101 320 U1 bekannt. Die US 2008/0110672 A1 offenbart eine Basis zur Verbindung mit einer Steckdose, wobei die Basis eine elektrische Steckverbindung und eine magnetische Frontplatte aufweist. Die EP 2 413 445 A1 zeigt einen Hohlkörper, an dem Magnetstreifen angebracht sind, um eine Abdeckung an diesen anzubringen oder von diesem zu entfernen. Die DE 1 690 418 A zeigt eine Abdeckung und eine Einbaudose, in der jeweils Magnete angeordnet sind. Die US 2005/0181675 A1 lehrt, dass ein Magnet in einer Abdeckung an einer Schraube haftet. Die US 2006/0089011 A1 zeigt einen elektrischen Verbinder mit Führungszapfen und Buchsen.

Derartige Geräte sind dafür vorgesehen, eine Vielzahl von in oder an Gebäuden installierten Aktoren oder Sensoren, wie Jalousieantriebe, Beleuchtungseinrichtungen, Bewegungsmelder, Gebäudezugangssysteme usw. zu bedienen. Zur komfortablen Bedienung sind diese, meist elektrischen/elektronischen Installationsgeräte mit oft als Displayeinheiten ausgeführten Bedien- und/oder Anzeigeelementen ausgerüstet.

Für eine Unterputzmontage sind die Installationsgeräte aus einer von einer Unterputzgerätedose aufnehmbaren Installationseinheit, welche mit einem Tragrahmen bzw. Tragring ausgestattet ist und aus einem auf den Tragrahmen der Installationseinheit aufsteckbarem Bedienteil oder Funktionsteil aufgebaut.

Der Erfindung liegt die Aufgabe zugrunde ein Gerät, insbesondere ein elektronisches Unterputzgerät, der Gebäudeinstallationstechnik oder Gebäudesystemtechnik mit wenigstens einem, vorzugsweise als Display ausgeführtem, Bedien- und/oder Anzeigeelement zu schaffen, bei welchem eine einfache, lösbare mit geringem Montageaufwand durchführbare Befestigung des Bedien- oder Funktionsteiles am Tragrahmen des Gerätes realisiert ist.

Diese Aufgabe wird erfindungsgemäß durch Anspruch 1 gelöst.

Erfindungsgemäß ist der Tragring aus einem ferromagnetischen Material gebildet.

Das Gerät weist auch eine Displayeinheit auf. Die Displayeinheit ist auf einem Sockelteil aufgesetzt, wobei das Sockelteil mit zumindest zwei sich gegenüberliegenden, vorzugsweise als Tasche ausgeführten, Ausnehmungen versehen ist, in die dauermagnetische Teile, auch als Permanentmagnete bekannt, eingesetzt sind. Die magnetischen Teile können in die Ausnehmungen, beispielsweise eingeklebt oder mittels einer Schraubverbindung befestigt sein.

In einer weiteren Ausführungsform können die Ausnehmungen zur Aufnahme der dauermagnetischen Teile auch im Tragring untergebracht sein. Dann werden die auf dem Sockelteil befindlichen dauermagnetischen Teile von den Ausnehmungen im Tragring aufgenommen.

Die kraftschlüssige Verbindung zwischen Bedien- und Anzeigeelement und der Installationseinheit erfolgt durch magnetische Kräfte, die ihre Wirkung entfalten, wenn sich das Bedien- und Anzeigeelement über dem Tragring befindet und durch magnetische Kräfte an diesen herangezogen wird. Dadurch wird in vorteilhafter Weise eine Montageerleichterung für den Installateur des Installationsgerätes geschaffen.

In einer nicht beanspruchten Ausgestaltung sind die dauermagnetischen Teile auf dem Tragring befestigt und im Sockelteil des Bedien- und Anzeigeelements befinden sich ferromagnetische Inlays, die beispielsweise als kleine Metallplatten ausgeführt sein können.

Besonders vorteilhaft ist, dass das erfindungsgemäße Gerät so ausgelegt ist, dass es möglichst flach an der Wand bzw. auf der Putzschicht der Wand aufliegt und keine zusätzlichen Verbindungselemente zur Montage des Bedien- und Anzeigeelements an der Wand benötigt werden bzw. von außen sichtbar sind.

Weiterhin kann das Bedien- und Anzeigeelement ohne großen Aufwand, beispielsweise für Renovierungsarbeiten oder zum Einlegen/ Entnehmen einer gegebenenfalls im Gerät vorhandenen Speicherkarte, wieder von der Installationseinheit entfernt werden.

Anhand der in den folgenden Figuren dargestellten Ausführungsbeispiele sollen die Erfindung sowie vorteilhafte Ausgestaltungen und Verbesserungen der Erfindung näher erläutert und beschrieben werden.

Es zeigen:
Fig. 1 eine Schnittdarstellung durch ein beispielhaftes elektronisches Unterputzgerät ausgestattet mit einem Bedien- und Anzeigeelement,
Fig. 2 eine Explosionsdarstellung des beispielhaften Unterputzgerätes vor der Montage in der Wand eines Gebäudes,
Fig. 3 eine Draufsicht auf das Bedien- und Anzeigeelement des beispielhaften Unterputzgerätes sowie eine Schnittdarstellung desselben, und
Fig. 4 eine Draufsicht auf das beispielhafte Unterputzgerät und eine Schnittdarstellung desselben nach der Montage des Bedien- und Anzeigeelements in der Installationseinheit.

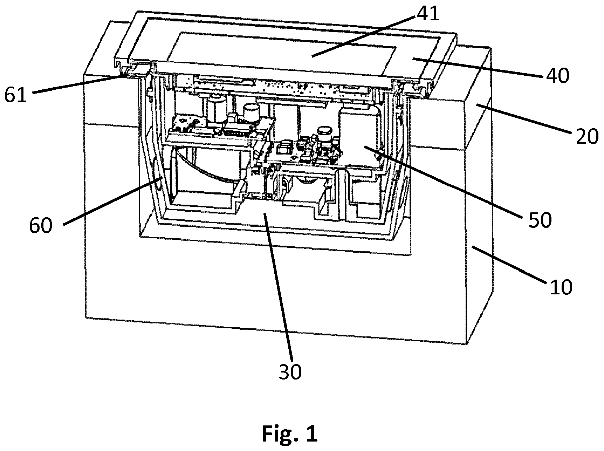

In der Fig. 1 ist eine Schnittdarstellung durch ein beispielhaftes elektronisches Unterputzgerät ausgestattet mit einem Bedien- und Anzeigeelement 40, gezeigt, welches in eine in einer Wand 10 eingebauten Unterputzgerätedose 30 installiert ist. Auf die Wand 10 ist eine Putzschicht 20 aufgebracht.

In der Unterputzdose 30 befindet sich eine Installationseinheit 60, welche mit einem Tragrahmen bzw. Tragring 61 ausgestattet ist. Der Tragring 61 ist am Außenrand der Installationseinheit 60 montiert und erfindungsgemäß aus einem ferromagnetischem Material, vorzugsweise Stahl, gebildet.

Auf der Installationseinheit 60 ist das, beispielsweise als Touchscreen-Element ausgeführte, Bedien- und Anzeigeelement 40, aufgebracht, dessen Elektronikeinsatz 50 inklusive Elektronik in den Innenraum der Installationseinheit 60 hineinragt. Das Bedien- und Anzeigeelement 40 ist weiterhin mit einer Displayeinheit 41 ausgestattet. Die Displayeinheit 41 ist auf einem die Displayeinheit 41 umschließenden Sockelteil aufgesetzt.

Das Bedien- und Anzeigeelement 40 ist mit der Installationseinheit 60 über eine zur elektrischen Kontaktierung vorgesehene Steckverbindung und erfindungsgemäß über eine als Magnetverbindung ausgeführte mechanische Verbindung lösbar verbunden.

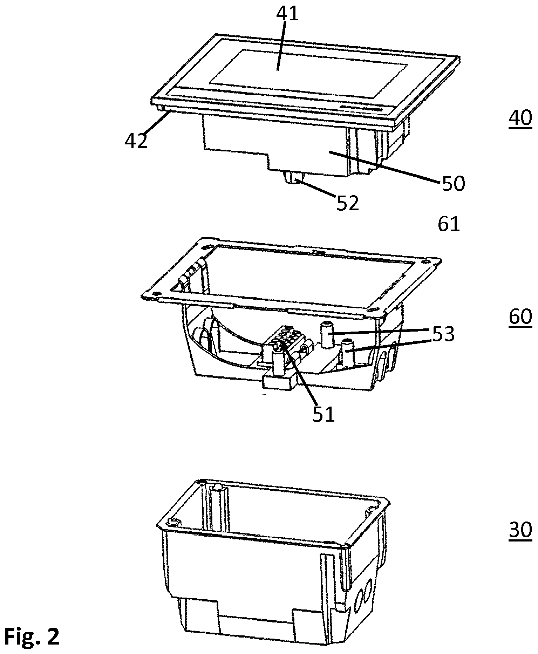

Fig. 2 zeigt eine Explosionsdarstellung des beispielhaften Unterputzgerätes vor der Montage in der Wand 10 eines Gebäudes, welches im Wesentlichen aus dem Bedienteil 40 mit der Displayeinheit 41, dem Sockelteil 42 zur Aufnahme der Displayeinheit 41 und dem Elektronikeinsatz 50, der Installationseinheit 60 mit darauf befindlichem Tragring 61 und der Unterputzgerätedose 30 besteht.

Der elektrische Anschluss des Unterputzgerätes, beispielsweise an das 230 V-Wechselspannungsnetz des Gebäudes oder an eine Busspannung einer Gebäudesystemsteuerung, erfolgt über Anschlussklemmen an der Installationseinheit 60.

Der elektrische Anschluss zwischen dem Bedien- und Anzeigeelement 40 und der Installationseinheit 60 ist über eine Steckverbindung realisiert. Dazu befindet sich an der zur Unterputzgerätedose 30 hineinragenden Seite des Elektronikeinsatzes 50 ein Steckerteil 52, das mit einem im Innenraum der Installationseinheit 60 angeordneten Buchsenteil 51 verbindbar ist.

Bei der der Montage des Bedien- und Anzeigeelements 40 wird dieses zunächst mit dem Elektronikeinsatz 50 in die Installationseinheit 60 hineingeführt und dann über die Steckverbindung 51, 52 elektrisch verbunden.

Die kraftschlüssige Verbindung des Bedien- und Anzeigeelements 40 mit dem Tragring 61 der Installationseinheit 60 erfolgt über eine magnetische Verbindung zwischen dem Tragring 61 und über in das Sockelteil 42 der Displayeinheit 41 eingebrachte Dauermagnete, die dann in Eingriff kommen wenn sich das Bedien- und Anzeigeelement 40 nahe über dem Tragring 61 befindet und durch magnetische Kräfte an diesen herangezogen werden.

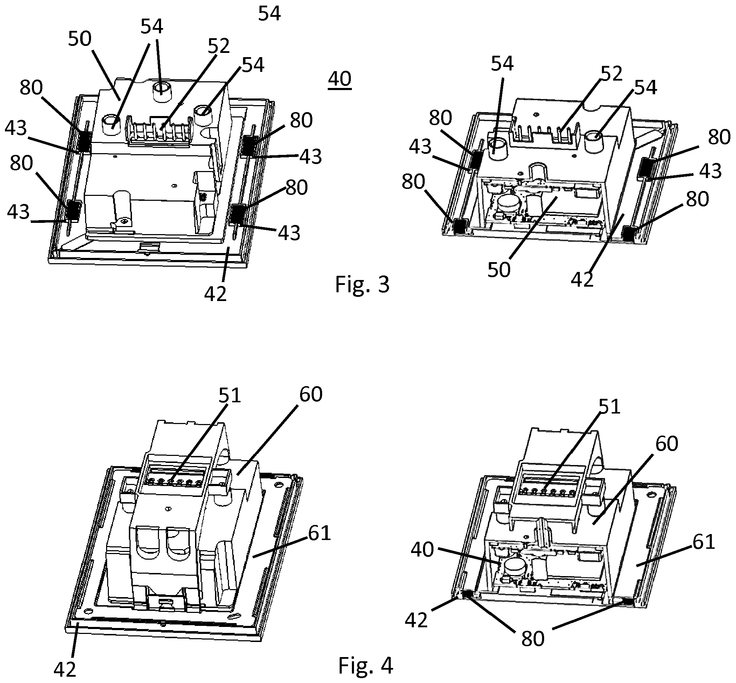

Weiterhin ist die in der Fig. 2 gezeigte erfindungsgemäße Installationseinheit 60 mit drei Führungszapfen 53, ausgestattet, welche in korrespondierenden Buchsen 54 des Elektronikeinsatzes 50 eingreifen. Die Buchsen 54 sind der Fig. 3 zu entnehmen. Diese dienen zur rotationsfreien Montage bzw. Ausrichtung des Gerätes.

Die mit der Erfindung erzielbaren Vorteile bestehen insbesondere darin, dass mittels der Steckverbindung 51, 52 zwischen Installationseinheit 60 und dem Bedien- und Anzeigeelement 40 eine ausreichende Überlappung vorhanden ist. Durch die vorgeschlagene Lösung wird ein Tapetenausgleich dahingehend erreicht, dass selbst wenn das Bedien- und Anzeigeelement 40 bei einer Renovation abgenommen und über den Tragring 61 tapeziert wird, funktioniert dieses Haltesystem auf Grund der Magnetverbindung zwischen Tragring 61 und Bedien- und Anzeigeelement 40 immer noch, ohne dass die Tapete zwingend wieder entfernt werden muss.

Die Ausführung der magnetischen Verbindung zwischen Tragring und Bedien- und Anzeigeelement 40 ist in den nachfolgenden Fig. 3 und 4 dargestellt und näher beschrieben.

Die Fig. 3 zeigt eine Draufsicht auf das Bedien- und Anzeigeelement 40 des beispielhaften Unterputzgerätes mit dem Elektronikeinsatz 50 und dem Steckerteil 52 sowie eine Schnittdarstellung durch dieses Element 40.

Das mit der in dieser Ansicht nicht sichtbaren Displayeinheit 41 ausgestattete Bedien- und Anzeigeelement 40 wird bei seiner Montage so auf die Installationseinheit 60 aufgesetzt, dass der Elektronikeinsatz 50 von der Installationseinheit 60 umschlossen ist.

Die Displayeinheit 41 ist auf dem Sockelteil 42 aufgesetzt. Das Sockelteil 42 ist mit vier als Tasche ausgeführten, vorzugsweise rechteckförmigen, Ausnehmungen 43 versehen, von denen sich jeweils zwei der Ausnehmungen 43 gegenüberliegen. In die Taschen 43 sind dauermagnetische Teile 80 eingesetzt, welche vorzugsweise durch sogenannte Schaberippen eingeklemmt und durch einen Hinterschnitt im Sockelteil 42 formschlüssig gehalten werden. Die dauermagnetischen Teile 80 ermöglichen eine magnetische Verbindung mit dem aus ferromagnetischem Material, vorzugsweise Stahl, gefertigten Tragring 61.

Die Fig. 4 zeigt eine Draufsicht auf das beispielhafte Unterputzgerät und eine Schnittdarstellung desselben im Bereich der dauermagnetischen Teile 80 mit der Installationseinheit 60 und darauf angeordnetem Tragring 61. In die Installationseinheit 60 ist das Bedien- und Anzeigeelement 40 eingesetzt und am Tragring 61 mittels der in den Taschen 43 des Sockelteiles 42 vorgesehenen dauermagnetischen Teilen 80 lösbar befestigt.

Weiterhin sind die Anschlussklemmen 51 der Installationseinheit 60 gezeigt, mittels derer der elektrische Anschluss des Unterputzgerätes an ein 230 V-Wechselspannungsnetz des Gebäudes erfolgt.

### Bezugszeichenliste

10 Wand
20 Putzschicht
30 Gerätedose (Aufputz- oder Unterputzgerätedose)
40 Bedien- und Anzeigeelement
41 Displayeinheit
42 Sockelteil
43 Tasche, Ausnehmung
50 Elektronikeinsatz
51 Anschlussklemmen zum Anschluss an ein Wechselspannungsnetz
52 Steckerteil der Steckverbindung
53 Führungszapfen
54 Buchsen
60 Installationseinheit
61 Tragrahmen, Tragring
80 dauermagnetisches Teil, Dauermagnet, Permanentmagnet

## Patentansprüche

1. Gerät der Gebäudeinstallationstechnik oder Gebäudesystemtechnik mit einer von einer Gerätedose (30) aufnehmbaren Installationseinheit (60), welche mit einem Tragring (61) ausgestattet ist, und mit wenigstens einem auf die Installationseinheit (60) aufbringbaren Bedien- und Anzeigeelement (40), mit einem Elektronikeinsatz (50), einem Sockelteil (42) und einer Displayeinheit (41), wobei die Displayeinheit (41) auf dem die Displayeinheit (41) umschließenden Sockelteil (42) aufgesetzt ist, wobei eine kraftschlüssige Verbindung zwischen Bedien- und Anzeigeelement (40) und der Installationseinheit (60) durch magnetische Kräfte erfolgt, die ihre Wirkung entfalten, wenn sich das Bedien- und Anzeigeelement (40) über dem Tragring (61) befindet, wobei das Bedien- und Anzeigeelement (40) mit der Installationseinheit (60) über eine zur elektrischen Kontaktierung vorgesehene Steckverbindung (51, 52) und über die als Magnetverbindung ausgeführte mechanische kraftschlüssige Verbindung lösbar verbunden ist, wobei das Sockelteil (42) mit zumindest zwei sich gegenüberliegenden Ausnehmungen (43) versehen ist, in die dauermagnetische Teile (80) eingesetzt sind, oder der Tragring (61) mit zumindest zwei sich gegenüberliegenden Ausnehmungen (43) versehen ist, welche auf dem Sockelteil (42) befindliche dauermagnetische Teile (80) aufnehmen,
**dadurch gekennzeichnet,**
**dass** der Tragring (61) aus einem ferromagnetischen Material gebildet ist, wobei die Installationseinheit (60) mit drei Führungszapfen (53) ausgestattet ist, welche in korrespondierenden Buchsen (54) des Elektronikeinsatzes (50) eingreifen.

2. Gerät nach Anspruch 1, **dadurch gekennzeichnet, dass** die Ausnehmungen (43) zur Aufnahme der dauermagnetischen Teile (80) als Tasche ausgebildet sind.

3. Gerät nach einem der vorstehenden Ansprüche, **dadurch gekennzeichnet, dass** die Displayeinheit (41) als Touchscreen-Element ausgebildet ist.

4. Gerät nach einem der vorstehenden Ansprüche, **dadurch gekennzeichnet, dass** das Gerät als elektrisches oder elektronisches Aufputz- oder Unterputzgerät ausgeführt ist.

## Claims

1. Device for building installation technology or building systems technology, having an installation unit (60) which can be received by a device box (30) and is equipped with a supporting ring (61), and having at least one operator control and display element (40) which can be fitted onto the installation unit (60) and has an electronics insert (50), a base part (42) and a display unit (41), wherein the display unit (41) is mounted on the base part (42) surrounding the display unit (41), wherein a non-positive connection is made between the operator control and display element (40) and the installation unit (60) by magnetic forces which take effect when the operator control and display element (40) is located above the supporting ring (61), wherein the operator control and display element (40) is detachably connected to the installation unit (60) via a plug-in connection (51, 52) provided for making electrical contact and via the mechanical non-positive connection designed as a magnetic connection, wherein the base part (42) is provided with at least two opposite recesses (43) into which permanent-magnetic parts (80) are inserted, or the supporting ring (61) is provided with at least two opposite recesses (43) which receive permanent-magnetic parts (80) located on the base part (42),
**characterized**
**in that** the supporting ring (61) is formed from a ferromagnetic material, wherein the installation unit (60) is equipped with three guide pins (53) which engage into corresponding sockets (54) of the electronics insert (50) .

2. Device according to Claim 1, **characterized in that** the recesses (43) for receiving the permanent-magnetic parts (80) are in the form of pockets.

3. Device according to either of the preceding claims, **characterized in that** the display unit (41) is in the form of a touchscreen element.

4. Device according to one of the preceding claims, **characterized in that** the device is designed as an electrical or electronic surface-mounted or flush-mounted device.

## Revendications

1. Appareillage d'installation domotique ou de gestion technique de bâtiment, comprenant une unité d'installation (60) pouvant être accueillie par une boîte d'appareillage (30) et équipée d'une bague porteuse (61), et comprenant au moins un élément de commande et d'affichage (40) pouvant être monté sur l'unité d'installation (60), comprenant un module électronique (50), une partie formant socle (42) et une unité d'affichage (41), l'unité d'affichage (41) étant posé sur la partie formant socle (42) entourant l'unité d'affichage (41), une liaison par adhérence entre l'élément de commande et d'affichage (40) et l'unité d'installation (60) étant effectuée par des forces magnétiques qui prennent effet lorsque l'élément de commande et d'affichage (40) se trouve au-dessus de la bague porteuse (61), l'élément de commande et d'affichage (40) étant reliée à l'unité d'installation (60) de manière amovible par le biais d'une connexion à enfichage (51, 52) prévue pour l'établissement du contact électrique et par le biais de la liaison par adhérence mécanique réalisée sous la forme d'une liaison magnétique, la partie formant socle (42) étant pourvue d'au moins deux creux (43) mutuellement opposés dans lesquels sont introduites des pièces (80) à magnétisme permanent, ou alors la bague porteuse (61) étant pourvue d'au moins deux creux (43) mutuellement opposés qui accueillent les pièces (80) à magnétisme permanent se trouvant sur la partie formant socle (42),
**caractérisé en ce que**
la bague porteuse (61) est formée d'un matériau ferromagnétique, l'unité d'installation (60) étant équipée de trois tenons de guidage (53) qui viennent en prise dans des douilles (54) correspondantes du module électronique (50).

2. Appareillage selon la revendication 1, **caractérisé en ce que** les creux (43) sont configurés en tant que poches pour accueillir les pièces (80) à magnétisme permanent.

3. Appareillage selon l'une des revendications précédentes, **caractérisé en ce que** l'unité d'affichage (41) est réalisée sous la forme d'un élément à écran tactile.

4. Appareillage selon l'une des revendications précédentes, **caractérisé en ce que** l'appareillage est réalisé en tant qu'appareil à pose apparente ou à pose encastrée.
